# EUROPEAN PATENT SPECIFICATION

(11) **EP 1 648 694 B1**
(45) Date of publication and mention of the grant of the patent: **23.04.2008**
(21) Application number: 04740948.7
(22) Date of filing: 09.07.2004
(51) Int. Cl.: B32B 15/01, B23K 35/02, B23K 35/28, C22C 21/06

(54) **HIGH STRENGTH ALUMINIUM ALLOY BRAZING SHEET**
HOCHFESTES ALUMINIUMLEGIERUNGSHARTLÖTBLECH
TOLE POUR BRASAGE, CONSTITUEE D'ALLIAGE D'ALUMINIUM, A HAUTE RESISTANCE MECANIQUE

(30) Priority: 18.07.2003 EP 03077272
(43) Date of publication of application: 26.04.2006
(73) Proprietor: Aleris Aluminum Koblenz GmbH, 56070 Koblenz (DE)
(72) Inventor: BENEDICTUS, Rinze, NL-2612 PJ Delft (NL); BÜRGER, Achim, 56203 Hoeher-Grenzhausen (DE); MILLER, William, Sinclair, NL-1971 KX IJmuiden (NL); HASZLER, Alfred, Johann, Peter, 56179 Vallendar (DE)
(74) Representative: Müller, Frank Peter
(86) International application number: PCT/EP2004/007702
(87) International publication number: WO 2005/014274

(56) References cited:
- EP-A- 0 718 072
- WO-A-02/49798
- US-A- 2 821 014
- US-A- 6 019 939
- US-A1- 2003 079 856
- US-B1- 6 413 331

## Description

### FIELD OF THE INVENTION

The present invention relates to an aluminium alloy brazing sheet for brazing which has high strength, high formability, improved brazing properties and an excellent corrosion resistance. The invention relates further to a brazed assembly comprising such brazing sheet and to a method for producing such an aluminium alloy brazing sheet. More specifically, the present invention relates to a high strength multi-layered aluminium material with improved brazing properties, comprising an interlayer between braze cladding and core, thereby improving corrosion resistance and reducing penetration of silicon and magnesium during the brazing cycle.

### DESCRIPTION OF THE RELATED ART

It is known in the art to apply aluminium alloy brazing sheet for use, for example, in heat exchangers, oil coolers, inter coolers, evaporators or condensers of automobiles or other vehicles or applications using heat exchangers. Conventionally, these assemblies are manufactured from brazing sheets for brazing using Al-Mn based aluminium alloys or Al-Mg-Si based aluminium alloys as a core material and Al-Si based aluminium alloys, typically of the Aluminum Association (AA)4xxx-series alloys, as a clad brazing filler material for conventional brazing applications. Once these brazing sheets are assembled and brazed to for example a heat exchanger for automobiles a cooling medium or a heating medium is charged through said assembly. Hence, it is crucial to prevent leakage of the brazed assembly while at the same time reducing the weight and size of such assemblies. Therefore, recent developments showed assemblies made from brazing sheets, which were improved to reduce the size, weight and cost by decreasing the material thickness and changing the design of the structure of the heat exchanger.

To improve the brazing quality and durability of heat-treatable brazing sheet a multi-layered clad aluminium material was developed, see H. Engström and L.-O. Gullman, "A Multilayer Clad Aluminium Material with Improved Brazing Properties", 18th International AWS Brazing Conference, of March 24-26, 1987 in Chicago. In this paper it is proposed to use an interlayer between the braze cladding and the core layer in order to increase the corrosion resistance. Furthermore, the results showed that silicon penetration along grain boundaries of the core layer was significantly delayed in such multilayered material compared to standard "core/braze"-material and more silicon remained in the clad layer and the penetration depth was reduced.

JP-02030394 discloses an aluminium brazing sheet consisting of a core material, an Al-Si alloy brazing material and an intermediate layer of pure Al alloy on one or both sides of the core material. The core layer comprised essentially the following composition (in weight %):
Cu: 0.10 - 1.0
Mn: 0.30 - 1.5
Mg: 0.10 - 1.0,
the balance aluminium with inevitable impurities.

JP-09176767 discloses an aluminium brazing sheet for vacuum brazing comprising a core layer with the following composition (in weight %):
Cu: 0.10 - 0.80
Mn: 0.30 - 1.5
Ti: 0.01 - 0.20,
the balance aluminium with inevitable impurities, a brazing filler layer having a composition consisting of (in weight %) Si: 5.0 to 15, Mg: 0.30 to 2.5, the balance aluminium with inevitable impurities as well as an intermediate sacrificial corrosion layer composed of an Al-Zn alloy containing (in wt.%) 2.0 - 5.0 Zn.

EP-0823305-A2 discloses a brazing sheet with good corrosion resistance for use in heat exchangers comprising a core layer with the following composition (in weight %):
Cu: 0.15 - 0.35
Mn: 0.50 - 1.6
Mg: 0.05 - 0.50
Ti: 0.06 - 0.30,
the remainder aluminium and unavoidable impurities, a clad layer comprising an Al-Si-Mg type cladding material and an intermediate layer with (in weight %) Mn: 0.50 - 1.2, the remainder aluminium and unavoidable impurities as well as Mg: 0.05 - 1.20 as an option, thereby also disclosing the addition of Zn in an amount of (in weight %) 1.0 - 5.0. These multiclad or multilayered brazing sheets showed tensile properties after brazing of 140 MPa to 165 MPa.

EP-0799667-A1 discloses an aluminium alloy brazing sheet for brazed heat exchangers comprising a core layer with the following composition (in weight %):
Cu: 0.05 - 1.2 (optionally)
Mn: 0.50 - 1.5
Si: ≤ 0.60
Fe: ≤ 0.70,
the balance aluminium and inevitable impurities, wherein the inevitable impurities are restricted to 0.60 wt% or below of Si and 0.70 wt% or below of Fe. Furthermore, such brazing sheet incorporates a clad layer of the Al-Si based filler alloy type and an intermediate layer comprising aluminium and inevitable impurities which are limited to a total amount of 1.0 wt%.

EP-1175954-A1 discloses a multi-layered aluminium alloy brazing sheet with a core layer comprising the following composition (in weight %):
Cu: 0.20 - 1.0
Mn: 0.30 - 1.5
Mg: ≤ 0.30
Si: 0.30 - 1.3
Fe: ≤ 0.20,
the balance aluminium and inevitable impurities, a brazing filler material being formed on one surface of the core material comprising an Al-Si based aluminium alloy and a cladding material which is formed on the other side of the core material and which contains (in weight %):
Mg: 2.0 - 3.5
Zn: 0.50 - 2.0
Si: ≤ 0.20,
the balance aluminium and inevitable impurities. Furthermore, it is described that it is not preferable to add magnesium to the core material, even though the adding of magnesium improves the strength of the brazing sheet, since in a NOCOLOK (registered trade mark) flux brazing method, the brazing property of a brazing sheet in which magnesium is added to a core material is significantly degraded. During brazing the magnesium penetrates to the surface of the clad brazing layer and effects the NOCOLOK flux salt.

WO-02/49798-A2 discloses a four layer heat treatable brazing sheet for use as a folded and/or welded tubes for header/type type heat exchangers. The core layer is of an aluminium alloy containing (in wt.%):
Mn 0.5 - 1.7
Mg 0.1-1
Cu 0.02 - 1.2
Si up to 0.9
Ti 0.02 - 0.25.
US 6,413,331 B1 discloses an aluminium alloy in the form of a sheet, plate or extrusion, having a composition in the range (in weight%):
Si: <0.15
Mn: 0.7-1.5
Mg: up to 0.8
Cu: 0.5-1.5
Fe: < 0.4
Cr: < 0.30
Ti: < 0.30
V: < 0.30
Zr: < 0.30
others each < 0.05, total < 0.15
balance aluminium, and said aluminium alloy is provided in an aged condition.
EP 0 718 072 A1 discloses a brazing sheet having a core sheet made of an aluminium alloy core material and on at least one side thereof a brazing layer of an aluminium alloy containing silicon as main alloying element, wherein the aluminium alloy of the core sheet has the composition (in weight%):
Mn: 0.7-1.5
Cu: 0.2-2.0
Mg: 0.1-0.6
Si: > 0.15
Fe: up to 0.8
Ti: optional, up to 0.15
Cr: optional, up to 0.35
Zr and/or V: optional, up to 0.25 in total
balance Al and unavoidable impurities, with the provisio that (Cu + Mg) > 0.7.
The alloy compositions of the various distinct layers are optimised to provide sufficient internal corrosion resistance for use as tubing in a heat exchanger.

US-2002/0037426-A1 discloses an aluminium alloy brazing sheet for a heat exchanger having a four-layered structure with a core material, a clad layer with a filler alloy of an Al-Si alloy and a sacrificial anode material for an intermediate layer (interlayer) of an Al-Zn alloy wherein the core alloy is composed of (in wt.%):
Cu: 0.05 - 0.50
Mn: 0.05 - 2.0
Fe: 0.20 - 0.80
Si: 0.10-0.50,
the balance aluminium and unavoidable impurities wherein the intermediate layer is composed of a composition comprising essentially (in weight %):
Cu: 0.40 - 1.0
Mn: 0.50 - 2.0
Si: 0.10 - 0.50
Fe: 0.20 - 0.80,
the balance aluminium and unavoidable impurities.

### SUMMARY OF THE INVENTION

Since it has been difficult to obtain a brazing sheet product which does not only have good brazing properties and formability characteristics but also a high strength and an improved corrosion resistance it is an object of the present invention to obtain these. More specifically, it is an object of the present invention to increase the yield strength after brazing and natural ageing from about 50 MPa of the conventional AA3xxx-alloy to at least 100 MPa and at the same time obtaining a high incipient melting point for the core layer in order to be able to produce light brazing assemblies having less thickness and less weight.

It is yet another object of the present invention to provide a method for producing a high strength aluminium alloy brazing sheet and/or a brazed assembly which manufacturing costs are lower than those of regular methods thereby using thinner materials to accomplish light weight and lower manufacturing costs as well as simultaneously producing a multiclad or multilayered aluminium material.

The present invention meets one or more of these objectives by an high strength aluminium alloy brazing sheet product according to claim 1.

In a further aspect of the invention there is provided a method of manufacturing such a high strength aluminium brazing sheet product. Preferred embodiments are described and claimed in the corresponding dependent claims.

### DETAILED DESCRIPTION OF THE PREFERRED EMBODIMENTS

As will be appreciated herein below, except otherwise indicated, all percentages are by weight. Furthermore, alloy designations and temper designations refer to the Aluminum Association designations in Aluminum Standards and Data and the Registration Records, as published by the Aluminum Association.

By the addition of Cu the strength values of the brazing sheet product could be increased. However, the Cu content must be carefully balanced with the Mn and Mg content since the melting point of the core material is reduced by adding too much copper. At the same time the Cu content must be balanced with regard to an additional sacrificial interlayer since the addition of Cu increases also the corrosion potential of the resultant alloy which then becomes more noble. Hence, it has been found that the amount (in weight %) of Cu in the core layer is preferably in a range of 1.2 to 2.5, and more preferably in a range of 1.2 to 1.8. A more preferred lower limit for the Cu-content is 1.3%.

Manganese is an important alloying element for increasing the corrosion resistance and the strength of the core material. Since Mn adds to the mechanical strength without decreasing corrosion resistance it has been found that the amount of Mn in the core layer is preferably in a range of 0.1 to 0.5 wt.%. A more preferred upper-limit for the Mn-content is 0.45 wt.%. However, too high amounts of Mn result in large intermetallic compounds, which have an adverse effect on processability and corrosion resistance. Mn also makes the corrosion potential of the core material higher thereby assisting in improving the overall corrosion resistance.

Magnesium, together with Cu, also improves the mechanical strength, in particular after aging by the precipitation of an AlCuMg compound. However, an excessive amount of Mg results in penetration of Mg into the clad filler alloy and an undesired reaction with the brazing salt flux, e.g. NOCOLOK salt. It has been found that the amount of Mg in the core layer is preferably in a range of 0.2 to 0.95 wt.%, more preferably in a range of 0.3 to 0.8 wt.%.

Si contributes to improving the strength of the core alloy by solid solution strengthening in the matrix after brazing. Also, an intermetallic compound composed of Mg₂Si is precipitated by reaction of Si with Mg in the core layer. The amount of Si in the core layer is preferably in a range of 0.1 to 0.25 wt.%. When the content of silicon exceeds 0.5 wt.% large Si containing compounds are precipitated which adversely lower the corrosion resistance of the core alloy.

Iron enhances the formation of detrimental large intermetallic compounds, which are distributed throughout the alloy thereby promoting cracking of the alloy during forming. Hence, the amount (in weight %) of iron in the core layer should preferably be in a range of 0.1 to 0.4, and more preferably in a range of 0.10 to 0.30.

Preferably, zirconium, chromium, and/or vanadium, if added, should be below 0.25 wt.% each since they enhance the formation of intermetallic compounds thereby degrading processability of the brazing sheet and also the corrosion resistance. This is equally valid for titanium, which should be kept below 0.25 wt.% since the addition of titanium above 0.25 wt% has been found to result in a lower resistance to corrosion and less formability.

An embodiment of the present invention comprises a core layer as described above and a clad layer being formed on both sides of the core layer. Such brazing sheet product may be used in various applications where both sides are used for the joining of the brazing sheet.

In an embodiment the interlayer is applied on at least one side of the core layer, said interlayer having a corrosion potential difference against the core layer as measured according to ASTM-G69 of at least 10 mV, preferably of at least 30 mV versus SCE.

According to another preferred embodiment of the present invention an interlayer is formed on at least one side of the core layer wherein said interlayer comprises either a sacrificial (anode) material which is less corrosion resistant than the core layer or a protective material which is more corrosion resistant than the core layer. Preferably, the interlayer comprises either an Al-Mn alloy composition of the AA3xxx-type or a pure aluminium alloy of the AA1xxx-type or an AlMgSi alloy of the AA6xxx-type, each optionally with the addition of Zn to as much as about 3%, and preferably to as much as 1.5%. All percentages in this application are by weight unless otherwise indicated.

Through the use of an interlayer between the core layer and the clad layer comprising the filler material, one or more of the following advantages are obtained:

Firstly, the overall corrosion resistance can be enhanced while - at the same time - a considerable amount of copper can be used within the core layer, thereby obtaining an overall corrosion performance which is comparable to or better than conventional AA3xxx-type core materials or AA6xxx-type core materials and even high performance Long Life materials, combined with a high overall strength of the material.

Secondly, the interlayer serves as a barrier layer and prevents the diffusion of magnesium from the core layer to the clad layer and the diffusion of silicon from the clad layer to the core layer. By such reduction of element migration throughout the layers improved properties of the brazing sheet are achieved like better brazeability and mechanical properties.

A preferred interlayer of the present invention comprises an Al-Mn alloy comprising essentially the following composition (in weight %):
Mn: 0.8 to 1.5
Si: ≤ 0.5
Cu: ≤ 0.5
Mg: ≤ 0.3
Fe: ≤ 0.5
Ti: ≤ 0.2,
the balance aluminium and incidental elements and impurities, each <0.05%, total <0.15%.

Even more preferred, the interlayer of the present invention comprises zinc, in addition to or instead of manganese, preferably in a range of (in weight %) 0.50 to 2.5, more preferably in a range of 1.0 to 1.5. The addition of zinc makes the corrosion potential of the sacrificial anode material less noble in order to enhance the corrosion protection effect. It is believed that the interlayer deflects the corrosion path thereby protecting the core layer from being effected. The effect of adding zinc is insufficient when the amount is not enough. However, if zinc is added in a too high amount the melting point of the alloy is adversely decreased in the direction of the brazing temperature.

According to another preferred embodiment of the present invention the clad layer is formed on both sides of the core layer while the interlayer is formed on at least one side of the core layer in between the core layer and the clad layer. Since a brazing sheet in use has commonly one side, which is exposed to a corrosive atmosphere, such side should contain the interlayer in between the core layer and the clad layer in order to protect the core layer from corrosion after brazing. The ratio of thickness of the core layer and the interlayer is preferably in a range of 10 ≤ core layer/interlayer ≤ 50, wherein the interlayer has preferably a thickness of at least 40 µm. Such thickness is advantageous for multi-clad brazing sheet products of about 0.4 to 2.0 mm total thickness.

The thickness of the core layer (in percent compared to the total thickness of the brazing sheet) is preferably in a range of 60 to 90%, the thickness of the interlayer (in percent compared to the total thickness of the brazing sheet) is preferably in a range of 5 to 25% and the thickness of the clad layer is preferably (in percent compared to the total thickness of the brazing sheet) in a range of 5 to 15%.

A brazed assembly according to the present invention comprises a brazing sheet with a core layer as described above, an interlayer on one or both sides of the core layer and a clad layer of the Al-Si-type (filler alloy) on at least one interlayer, that means on at least one side of the layered structure.

The present invention also comprises the use of a brazing sheet as described above or of an assembly as described above for a brazing application such as a heat exchanger, as for example a radiator, an oil cooler, an inter cooler, a heater core, an evaporator or a condenser or similar applications and assemblies which are produced by joining brazing sheets for forming a compact assembly, mainly for the purpose of exchanging heat.

The present invention also provides a method according to claim 13 for producing an aluminium alloy brazing sheet having high strength and good corrosion resistance.

Here, it is advantageous to provide a rectangular groove in the core ingot by scalping out the groove in the size of the rolled inter member and said hot rolled clad member. Then, in the groove, a slice of rolled inter member and - on top of that - a slice of rolled clad member is placed, thereafter using the edge between the core material and clad material for weld-seaming the layered structure for hot rolling the layered member and optionally cold rolling into a rolled product.

According to another preferred embodiment of the present invention a new method for producing a multi-layered brazing sheet is presented: The method comprises the production of an aluminium alloy multi-clad or multi-layered brazing sheet by comprising the steps of:
a) casting a clad ingot, thereby using a composition as described above as a centre core layer and preferably an Al-Mn alloy composition of the AA3xxx-type or pure aluminium of the AA1xxx-type or an AlMgSi alloy of the AA6xxx-type, optionally with the addition of Zn, as an interlayer on both sides of the centre core layer, thereby forming said clad ingot (ingot with three layers of material, one centre core material, covered on both sides with interlayer material),
b) homogenising and/or pre-heating said clad ingot after casting,
c) casting a clad layer ingot comprising an Al-Si based filler alloy, homogenising and/or pre-heating the clad layer ingot after casting and hot rolling said clad layer ingot to a rolled clad member, and
d) superposing said clad ingot and said hot rolled clad layer member to form said multi-layered member,
e) hot rolling said multi-layered member and optionally cold rolling said multi-layered member into a rolled product,
f) optionally inter-annealing before and/or between cold rolling passes,
g) optionally final annealing, and
h) optionally ageing the rolled and optionally inter- and/or final annealed product.

Such method has the advantage that the core ingot and the integrated interlayer on both sides of the core ingot are cast at the same time, thereby reducing costs and the problem of shifting layers during hot rolling or roll cladding.

Other cladding techniques regular in the art such as spray cladding or continuous cast cladding can be applied in an analogous way to produce the multi-layered material of the present invention.

The present invention discloses also a preferred method for producing a brazed assembly as described above, by heating an assembly of brazing sheets, which are superposing each other and which are produced as described above, preferably through a method for casting a clad ingot, to the brazing temperature. A typical brazing cycle comprises for example heating to a first temperature within a first time interval and to a second temperature within a second time interval, dwelling said assembly at said second temperature for a third time interval and cooling said assembly at a certain cooling rate.

As an example said first temperature is in a range of about 500°C to 550°C, said second temperature is in a range of about 580°C to 600°C, said first time interval is in a range of about 8 to 12 minutes, said second time interval is in a range of about 3 to 7 minutes, said third time interval is in a range of about 2 to 4 minutes and said cooling rate is typically in a range of about 50°C/min to 70°C/min.

Various brazing processes like for example vacuum brazing or controlled atmosphere brazing, the latter with the use of for example NOCOLOK flux, or fluxless brazing advantageously using nickel and/or iron and/or cobalt, can be applied.

The present invention hence discloses a brazing sheet, which showed a core layer in which the intermetallics were small and uniformly distributed. The grain structure of the core alloys showed slightly elongated, recrystallized grains, the average grain size (width × length) was about 75 × 150 µm.

A decreased copper concentration towards the surface of the core layer could be found. Due to the lower copper concentration in the surface area the core alloy showed a significantly lower corrosion potential in the surface area, approaching the corrosion potential of the interlayer material. It is believed that thereby the interlayer protects the core layer from perforating corrosion, in particular against pitting corrosion. By the addition of zinc in the interlayer it is possible to provide the material an even higher corrosion potential difference thereby improving the overall corrosion performance, as shown in more detail below and in Table 4.

### BRIEF DESCRIPTION OF THE DRAWINGS

The aforementioned and other features and advantages of the brazing sheet according to the invention will become readily apparent from the following detailed description of some preferred embodiments. Some examples are shown in the appended drawings:
- Fig. 1: shows schematically, a basic brazing sheet structure
- Fig. 2: shows schematically a three-layered structure of the brazing sheet
- Fig. 3: shows schematically a five-layered structure according to the present invention;
- Fig. 4: shows schematically a section of a brazed assembly with superposed brazing sheets of the structure according to Fig.-3.

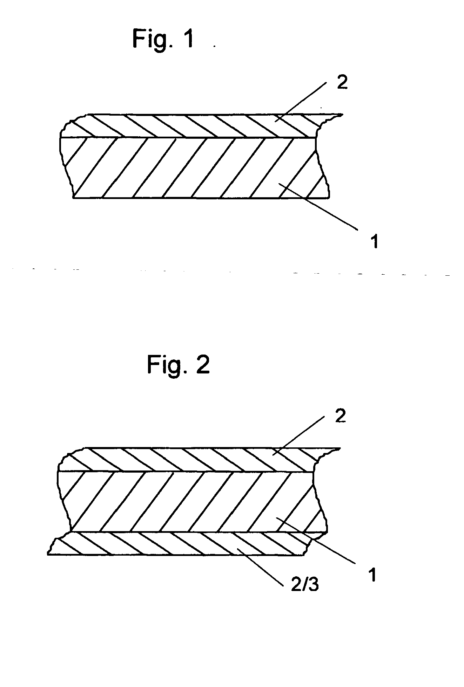

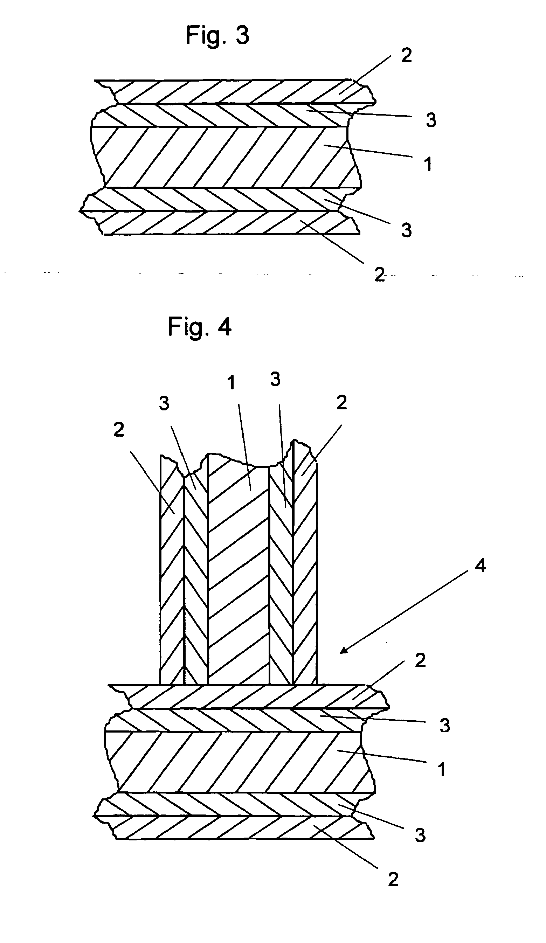

Fig. 1 shows a basic structure of the brazing sheet with a core layer 1 and a distinct clad layer 2. As shown in Fig. 2 and 3 the core layer 1 may be clad on both sides with the clad layer 2 of the Al-Si based filler alloy type or on one side with the clad layer 2 and on the other side with an interlayer 3. The other side with the interlayer 3 is exposed to the corrosive atmosphere.

A preferred embodiment of the present invention is shown in Fig. 3 and 4. The core layer 1 is embedded between two distinct interlayers 3 which are clad with clad layers 2. By producing an assembly containing the brazing sheets of the present invention, the clad layers 2 accumulate at the corner 4 of two superposed brazing sheets during brazing thereby being brazed together.

### EXAMPLE

On a laboratory scale five different aluminium alloys have been cast into ingots for being used as an Al-Cu alloy core layer for a high strength aluminium alloy brazing sheet having the following chemical composition as set out in Table 1.

The cast ingots have been sawn into rolling blocks of approx. 100 × 80 × 80 mm. After a homogenisation treatment the blocks were clad with a brazing filler layer of an AA4045 alloy and rolled down (to 0.4 or 1.0 mm) by a process route comparable to a standard process route used for brazing sheet materials. The multi-clad or multi-layered materials were then end-annealed to an O-temper condition at 350°C for 3 hour, the heat-up and cool-down rate was about 30°C/hour. Then, the multi-clad material was subjected to a typical brazing cycle (dwell time of 4 min at 590°C). The mechanical properties of the multi-clad alloys in the O-temper condition and after brazing and 30 days natural ageing are given in Table 2.

| **Table 1:** Chemical composition of the DC-cast core aluminium alloys, in weight percent, balance aluminium and inevitable impurities. | | | | | | |
|---|---|---|---|---|---|---|
| **Alloy** | **Alloying Element** | | | | | |
| | **Cu** | **Si** | **Mn** | **Mg** | **Fe** | **Ti** |
| **1** | 1.53 | 0.37 | 0.30 | 0.69 | 0.25 | 0.03 |
| **2** | 1.73 | 0.28 | 0.31 | 0.76 | 0.25 | 0.03 |
| **3** | 1.98 | 0.20 | 0.30 | 0.88 | 0.26 | 0.03 |
| **4** | 1.51 | 0.18 | 0.30 | 0.67 | 0.25 | 0.03 |
| **5** | 2.50 | 0.18 | 0.30 | 0.01 | 0.25 | 0.03 |

| **Table 2:** Tensile properties and elongation of core alloys 1 to 5 of Table 1 in O-temper condition, and post braze proof strength after 30 days natural ageing (Rp(p.b.)), and incipient melting temperature (T-Melt, measured by DSC) | | | | | |
|---|---|---|---|---|---|
| **Core Alloy** | **Rp** (MPa) | **Rm** (MPa) | **A80** (%) | **Rp (p.b.)** (Mpa) | **T-Melt** (°C) |
| **1** | 55 | 159 | 14.6 | - | 594 |
| **2** | 50 | 150 | 15.0 | 165 | 596 |
| **3** | 50 | 148 | 14.0 | - | 592 |
| **4** | 49 | 149 | 17.1 | 140 | 610 |
| **5** | 44 | 136 | 17.6 | - | 608 |

Table 2 shows that in O-temper condition the multi-clad alloys were considerably soft. The formability assessed by the elongation of the multi-clad alloys was reasonably good (14 to 18%). The incipient melting point was above 590°C, wherein it has been found that the addition of silicon and magnesium significantly decreases the incipient melting point where an extra addition of about 0.2% silicon decreases the incipient melting point by about 15°C. Hence, the decreasing silicon content resulted in an increasing melting point. Especially alloys 4 and 5 showed good properties (mechanical properties and melting point) with a low silicon content. Alloys 2 and 4 were tested with regard to the post braze tensile yield strength and very good values of 140 MPa and 165 MPa were measured.

Furthermore, alloy no. 4 has been further tested with regard to two different interlayer alloys interposed between the core alloy and the filler alloy. On a laboratory scale two different aluminium alloys have been cast thereby containing two different alloy compositions for the interlayer. The chemical compositions are set out in Table 3.

| **Table 3.** | Chemical composition of the DC-cast interlayer alloys in weight percent, Zr ≤ 0.05, Ti ≤ 0.05, balance aluminium and inevitable impurities. | | | | | |
|---|---|---|---|---|---|---|
| | **Alloying Element** | | | | | |
| **Interlayer Alloy** | **Mn** | **Si** | **Cu** | **Mg** | **Zn** | **Fe** |
| **1** | 1.07 | 0.19 | 0.10 | 0.02 | 0.00 | 0.31 |
| **2** | 1.05 | 0.19 | 0.10 | 0.02 | 1.34 | 0.31 |

Both alloys as shown in Table 3 were used in combination with a core layer comprising alloy no. 4 of Table 1. Both filler and interlayer thickness were 10% of the total thickness. The post braze mechanical properties of the various multi-clad materials after 35 days of natural ageing have been tested and are given in Table 4.

| **Table 4**: Post-braze mechanical properties after 35 days of natural ageing, corrosion performance (SWAAT test according to ASTM G85) of the multiclad materials, in combination with various thicknesses, end of test after 50 days. | | | | | | |
|---|---|---|---|---|---|---|
| **Alloy Core/Interl.** | | **Rp** (MPa) | **Rm** (MPa) | **A80** (%) | **SWAAT** (days) | **Total thickness** (mm) |
| **4** | **1** | 144 | 272 | 14.4 | 29 | 0.4 |
| **4** | **2** | 138 | 263 | 15.4 | 49 | 0.4 |
| **4** | **1** | 141 | 273 | 18.3 | 50 | 1.0 |
| **4** | **2** | 140 | 275 | 20.0 | 50 | 1.0 |

The SWAAT test results show excellent corrosion behaviour of the materials when compared to standard brazing materials. Furthermore, it has been shown that the corrosion resistance when measured in a SWAAT test of a multi-clad material with an interlayer comprising zinc is better than that of one with an interlayer without comprising zinc. The post braze proof strength of 140 MPa of alloy no. 4 is superior to most of the prior art core alloys. Hence, the multi-clad or multi-layered brazing sheet of the present invention has a very high post braze strength in combination with very good corrosion properties and a relatively high incipient melting point thereby adding good brazing properties to the structure.

## Claims

1. High strength aluminium alloy brazing sheet, comprising an Al-Cu core layer(1), clad layers(2) and at least one interlayer(3), said core layer(1) with the following composition (in weight percent):
Cu: 1.2 to 4.0
Mn: 0.1 to 0.5
Mg: 0.06 to 1.5
Si: ≤ 0.5
Zn: ≤ 0.4
Fe: ≤ 0.5
and optionally one ore more of:
Zr: ≤ 0.25
Cr: ≤ 0.25
V: ≤ 0.25
Ti: ≤ 0.25
the balance aluminum and incidental elements and impurities, said clad layers(2) comprising an Al-Si based filler alloy and being applied on both sides of the core layer(1) and an interlayer(3) being applied on at least one side of the core layer(1), said interlayer(3) comprising either a sacrificial anode material which is less corrosion resistant than the core layer(1) or a protective material which is more corrosion resistant than the core layer (1).

2. Brazing sheet according to claim 1, wherein the amount (in weight %) of Cu in the core layer(1) is in a range of 1.2 to 2.5, and more preferably in a range of 1.2 to 1.8.

3. Brazing sheet according to claim 1 or 2, wherein the amount (in weight %) of Mg in the core layer(1) is in a range of 0.2 to 0.95, and preferably in a range of 0.3 to 0.8.

4. Brazing sheet according to any one of the preceding claims, wherein the amount (in weight %) of Si in the core layer(1) is in a range of 0.1 to 0.25.

5. Brazing sheet according to any one of the preceding claims, wherein the amount (in weight %) of Zn in the core layer(1) is in a range of up to 0.25.

6. Brazing sheet according to any one of the preceding claims, wherein the amount (in weight %) of Fe in the core layer(1) is in a range of 0.1 to 0.4, and preferably in a range of 0.10 to 0.30.

7. Brazing sheet according to any one of the preceding claims, wherein an interlayer(3) is applied on at least one side of the core layer(1), said interlayer(3) having a corrosion potential difference against the core layer(1) as measured according to ASTM G69 of at least 10 mV, preferably of at least 30 mV versus SCE.

8. Brazing sheet according to claim 7, wherein said interlayer(3) comprises either an Al-Mn alloy composition of the AA3xxx-type or pure aluminum of the AA1xxx-type or an AlMgSi alloy of the AA6xxx-type, each optionally with the addition of up to 3% Zn.

9. Brazing sheet according to claim 7 or 8, wherein said interlayer(3) comprising an Al-Mn alloy composition with the following composition (in weight%):
Mn: 0.8 to 1.5
Si: ≤ 0.5
Cu: ≤ 0.5
Mg: ≤ 0.3
Fe: ≤ 0.5
Ti: ≤ 0.2
the balance aluminum and incidental elements and impurities.

10. Brazing sheet according to any one of claims 7 to 9, wherein said interlayer(3) comprises Zn, in addition to or instead of Mn, in a range of (in weight%) 0.5 to 2.5 and preferably in a range of 1.0 to 1.5.

11. Brazing assembly comprising a brazing sheet as claimed in any one of the preceding claims an wherein said assembly is composed of a five layered brazing sheet, comprising a core layer(1), an interlayer(3) on each side of the core layer and clad layers(2) on both interlayer(3).

12. Use of an aluminum alloy as claimed in one of the claims 1 to 6 in a brazing sheet product or in a brazed assembly according to claim 11.

13. A method for producing an aluminum alloy brazing sheet having high strength and good corrosion resistance, comprising the steps of:
a) casting a core ingot with the following composition (in weight%)
Cu: 1.2 to 4.0
Mn: 0.1 to 0.5
Mg: 0.06 to 1.5
Si: ≤ 0.5
Zn: ≤ 0.4
Fe: ≤ 0.5
optionally one or more of:
Zr: ≤ 0.25
Cr: ≤ 0.25
V: ≤ 0.25
Ti: ≤ 0.25
the balance aluminum and incidental elements and impurities as a core material,
b) homogenizing and/or preheating the core ingot after casting,
c) casting an interlayer ingot comprising either a sacrificial anode material which is less corrosion resistant than the core or a protective material which is more corrosion resistant than the core, preferably either an Al-Mn alloy composition of the AA3xxx-type or pure aluminum of the AA1xxx-type or an AlMgSi alloy of the AA6xxx-type, optionally with the addition of Zn up to 3 wt%, homogenizing and/or pre-heating the interlayer ingot after casting and hot rolling said interlayer ingot to a rolled interlayer member,
d) casting a clad ingot comprising an Al-Si based filler alloy, homogenizing and/or pre-heating the clad ingot after casting and hot rolling said clad ingot to a rolled clad member,
e) superposing said core ingot, said interlayer member and said hot rolled clad member to form a layered member,
f) hot rolling said layered member and optionally cold rolling said layered member into a rolled product,
g) optionally inter annealing said layered member between cold rolling passes,
h) optionally end annealing, and
i) ageing the rolled and optionally inter/end-annealed product.

14. A method for producing an aluminum alloy brazing sheet having high strength and good corrosion resistance, comprising the steps of:
a) casting a multiclad ingot, thereby using the composition as claimed in claim 13 as a center core layer(1) and an Al-Mn alloy composition of the AA3xxx-type or pure aluminum of the AA1xxx-type or an AlMgSi alloy of the AA6xxx-type, acting as sacrificial anode material as less corrosion resistant than the core or as protective material as more corrosion resistant than the core optionally with the addition of Zn as an interlayer(3) on both sides of the center core layer(1), thereby forming said multiclad ingot,
b) homogenizing and/or pre-heating said multiclad ingot after casting,
c) casting a clad ingot comprising an Al-Si based filler alloy, homogenizing and/or preheating the clad ingot after casting and hot rolling said clad ingot to a rolled clad member, and
d) superposing said multiclad ingot and said hot rolled clad member to form said layered member.

## Patentansprüche

1. Hochfestes Aluminiumlegierungs-Hartlötblech, umfassend eine Al-Cu-Kernschicht (1), Plattierschichten (2) und wenigstens eine Zwischenschicht (3), wobei die Kernschicht (1) die folgende Zusammensetzung aufweist (in Gew.-%):
Cu: 1,2 bis 4,0
Mn: 0,1 bis 0,5
Mg: 0,06 bis 1,5
Si: ≤ 0,5
Zn: ≤ 0,4
Fe: ≤ 0,5
und wahlweise eines oder mehrere von:
Zr: ≤ 0,25
Cr: ≤ 0,25
V: ≤ 0,25
Ti: ≤ 0,25
Rest Aluminium und unwesentliche Elemente und Verunreinigungen, wobei die Plattierschichten (2) eine Füllstofflegierung auf Al-Si-Basis enthalten und auf beide Seiten der Kernschicht (1) aufgebracht sind und eine Zwischenschicht (3) auf wenigstens eine Seite der Kernschicht (1) aufgebracht ist, wobei die Zwischenschicht (3) entweder ein Opferanodenmaterial, das weniger korrosionsbeständig ist als die Kernschicht (1), oder ein Schutzmaterial, das korrosionsbeständiger ist als die Kernschicht (1), enthält.

2. Hartlötblech nach Anspruch 1, wobei die Menge (in Gew.-%) von Cu in der Kernschicht (1) in einem Bereich von 1,2 bis 2,5 und bevorzugter in einem Bereich von 1,2 bis 1,8 liegt.

3. Hartlötblech nach Anspruch 1 oder 2, wobei die Menge (in Gew.-%) von Mg in der Kernschicht (1) in einem Bereich von 0,2 bis 0,95 und bevorzugt in einem Bereich von 0,3 bis 0,8 liegt.

4. Hartlötblech nach einem der vorhergehenden Ansprüche, wobei die Menge (in Gew.-%) von Si in der Kernschicht (1) in einem Bereich von 0,1 bis 0,25 liegt.

5. Hartlötblech nach einem der vorhergehenden Ansprüche, wobei die Menge (in Gew.-%) von Zn in der Kernschicht (1) in einem Bereich von bis zu 0,25 liegt.

6. Hartlötblech nach einem der vorhergehenden Ansprüche, wobei die Menge (in Gew.-%) von Fe in der Kernschicht (1) in einem Bereich von 0,1 bis 0,4 und bevorzugt in einem Bereich von 0,10 bis 0,30 liegt.

7. Hartlötblech nach einem der vorhergehenden Ansprüche, wobei eine Zwischenschicht (3) auf wenigstens eine Seite der Kernschicht (1) aufgebracht ist, wobei die Zwischenschicht (3) gegenüber der Kernschicht (1) eine Korrosionspotentialdifferenz nach Messung gemäß ASTM G69 von wenigstens 10 mV, bevorzugt von wenigstens 30 mV vs. GKE (SCE) aufweist.

8. Hartlötblech nach Anspruch 7, wobei die Zwischenschicht (3) entweder eine Al-Mn-Legierungszusammensetzung des Typs AA3xxx oder reines Aluminium des Typs AA1xxx oder eine AlMgSi-Legierung des Typs AA6xxx, jeweils wahlweise mit dem Zusatz von bis zu 3 % Zn, enthält.

9. Hartlötblech nach Anspruch 7 oder 8, wobei die Zwischenschicht (3) eine Al-Mn-Legierungszusammensetzung mit der folgenden Zusammensetzung enthält (in Gew.-%):
Mn: 0,8 bis 1,5
Si: ≤ 0,5
Cu: ≤ 0,5
Mg: ≤ 0,3
Fe: ≤ 0,5
Ti: ≤ 0,2
Rest Aluminium und unwesentliche Elemente und Verunreinigungen.

10. Hartlötblech nach einem der Ansprüche 7 bis 9, wobei die Zwischenschicht (3), zusätzlich zu oder an Stelle von Mn, Zn in einem Bereich von (in Gew.-%) 0,5 bis 2,5 und bevorzugt in einem Bereich von 1,0 bis 1,5 enthält.

11. Hartlötanordnung, umfassend ein Hartlötblech nach einem der vorhergehenden Ansprüche und wobei die Anordnung aus einem fünfschichtigen Hartlötblech besteht, das eine Kernschicht (1), eine Zwischenschicht (3) auf jeder Seite der Kernschicht und Plattierschichten (2) auf beiden Zwischenschichten (3) umfasst.

12. Verwendung einer Aluminiumlegierung nach einem der Ansprüche 1 bis 6 in einem Hartlötblechprodukt oder in einer hartgelöteten Anordnung nach Anspruch 11.

13. Verfahren zum Herstellen eines Aluminiumlegierungs-Hartlötbleches mit hoher Festigkeit und guter Korrosionsbeständigkeit, die folgenden Schritte umfassend:
a) Gießen eines Kernblocks mit der folgenden Zusammensetzung (in Gew.-%) :
Cu: 1,2 bis 4,0
Mn: 0,1 bis 0,5
Mg: 0,06 bis 1,5
Si: ≤ 0,5
Zn: ≤ 0,4
Fe: ≤ 0,5
wahlweise eines oder mehrere von:
Zr: ≤ 0,25
Cr: ≤ 0,25
V: ≤ 0,25
Ti: ≤ 0,25
Rest Aluminium und unwesentliche Elemente und Verunreinigungen als ein Kernmaterial,
b) Homogenisieren und/oder Vorwärmen des Kernblocks nach dem Gießen,
c) Gießen eines Zwischenschichtblocks, der entweder ein Opferanodenmaterial, das weniger korrosionsbeständig ist als der Kern, oder ein Schutzmaterial, das korrosionsbeständiger ist als der Kern, bevorzugt entweder eine Al-Mn-Legierungszusammensetzung des Typs AA3xxx oder reines Aluminium des Typs AA1xxx oder eine AlMgSi-Legierung des Typs AA6xxx, wahlweise mit dem Zusatz von Zn von bis zu 3 %, enthält, Homogenisieren und/oder Vorwärmen des Zwischenschichtblocks nach dem Gießen und Warmwalzen des Zwischenschichtblocks zu einem gewalzten Zwischenschichtelement,
d) Gießen eines Plattierblocks, der eine Füllstofflegierung auf Al-Si-Basis enthält, Homogenisieren und/oder Vorwärmen des Plattierblocks nach dem Gießen und Warmwalzen des Plattierblocks zu einem gewalzten Plattierelement,
e) Aufeinanderschichten des Kernblocks, des Zwischenschichtelementes und des warmgewalzten Plattierelementes, um ein Schichtelement auszubilden,
f) Warmwalzen des Schichtelementes und wahlweise Kaltwalzen des Schichtelementes zu einem Walzprodukt,
g) wahlweise Zwischenglühen des Schichtelementes zwischen Kaltwalzdurchgängen,
h) wahlweise Endglühen, und
i) Altern des gewalzten und wahlweise zwischen-/endgeglühten Produkts.

14. Verfahren zum Herstellen eines Aluminiumlegierungs-Hartlötbleches mit hoher Festigkeit und guter Korrosionsbeständigkeit, die folgenden Schritte umfassend:
a) Gießen eines Mehrfachplattierblocks, wobei die Zusammensetzung nach Anspruch 13 als eine mittige Kernschicht (1) und eine Al-Mn-Legierungszusammensetzung des Typs AA3xxx oder reines Aluminium des Typs AA1xxx oder eine AlMgSi-Legierung des Typs AA6xxx, als Opferanodenmaterial, das weniger korrosionsbeständig ist als der Kern, oder als Schutzmaterial, das korrosionsbeständiger ist als der Kern, agierend, wahlweise mit dem Zusatz von Zn, als eine Zwischenschicht (3) auf beiden Seiten der mittigen Kernschicht (1) verwendet werden, um **dadurch** den Mehrfachplattierblock auszubilden,
b) Homogenisieren und/oder Vorwärmen des mehrfach plattierten Blocks nach dem Gießen,
c) Gießen eines Plattierblocks, der eine Füllstofflegierung auf Al-Si-Basis enthält, Homogenisieren und/oder Vorwärmen des Plattierblocks nach dem Gießen und Warmwalzen des Plattierblocks zu einem gewalzten Plattierelement, und
d) Aufeinanderschichten des Mehrfachplattierblocks und des warmgewalzten Plattierelementes, um das Schichtelement auszubilden.

## Revendications

1. Feuille de brasage en alliage d'aluminium à haute résistance, comprenant une couche centrale en Al-Cu (1), des couches de placage (2) et au moins une couche intermédiaire (3), ladite couche centrale (1) ayant la composition suivante (en pour cent en poids) :
Cu : 1, 2 à 4, 0
Mn : 0,1 à 0,5
Mg : 0,06 à 1,5
Si : ≤ 0,5
Zn : ≤ 0,4
Fe : ≤ 0, 5
et, en option, un ou plus parmi :
Zr : ≤ 0,25
Cr : ≤ 0,25
V : ≤ 0,25
Ti : ≤ 0,25
le reste étant essentiellement de l'aluminium et des éléments accidentels et impuretés, lesdites couches de placage (2) comprenant un alliage d'apport à base Al-Si et étant appliquées des deux côtés de la couche centrale (1) et une couche intermédiaire (3) étant appliquée sur au moins un côté de la couche centrale (1), ladite couche intermédiaire (3) comprenant soit un matériau d'anode sacrificielle qui est moins résistant à la corrosion que la couche centrale (1), soit un matériau protecteur qui est plus résistant à la corrosion que la couche centrale (1).

2. Feuille de brasage selon la revendication 1, dans laquelle la quantité (en % en poids) de Cu dans la couche centrale (1) est comprise entre 1,2 et 2,5, plus préférablement entre 1,2 et 1,8.

3. Feuille de brasage selon la revendication 1 ou 2, dans laquelle la quantité (en % en poids) de Mg dans la couche centrale (1) est comprise entre 0,2 et 0,95, plus préférablement entre 0,3 et 0,8.

4. Feuille de brasage selon l'une quelconque des revendications précédentes, dans laquelle la quantité (en % en poids) de Si dans la couche centrale (1) est comprise entre 0,1 et 0.25.

5. Feuille de brasage selon l'une quelconque des revendications précédentes, dans laquelle la quantité (en % en poids) de Zn dans la couche centrale (1) est inférieure ou égale à 0,25.

6. Feuille de brasage selon l'une quelconque des revendications précédentes, dans laquelle la quantité (en % en poids) de Fe dans la couche centrale (1) est comprise entre 0,1 et 0,4, plus préférablement entre 0,10 et 0,30.

7. Feuille de brasage selon l'une quelconque des revendications précédentes, dans laquelle une couche intermédiaire (3) est appliquée sur au moins un côté de la couche centrale (1), ladite couche intermédiaire (3) ayant une différence de potentiel de corrosion par rapport à la couche centrale (1) mesurée selon ASTM G69 d'au moins 10 mV, de préférence d'au moins 30 mV par rapport à SCE.

8. Feuille de brasage selon la revendication 7, dans laquelle ladite couche intermédiaire (3) comprend soit une composition d'alliage Al-Mn du type AA3xxx, soit de l'aluminium pur du type AA1xxx, soit un alliage AlMgSi du type AA6xxx, chaque fois en option avec addition de jusqu'à 3 % de Zn.

9. Feuille de brasage selon la revendication 7 ou 8, dans laquelle ladite couche intermédiaire (3) comprend une composition d'alliage Al-Mn ayant la composition suivante (en % en poids) :
Mn : 0,8 à 1,5
Si : ≤ 0,5
Cu : ≤ 0,5
Mg : ≤ 0,3
Fe : ≤ 0,5
Ti : ≤ 0,2
le reste étant de l'aluminium et des éléments accidentels et impuretés.

10. Feuille de brasage selon l'une quelconque des revendications 7 à 9, dans laquelle ladite couche intermédiaire (3) comprend Zn, en complément ou à la place de Mn, en quantité (en % en poids) comprise entre 0,5 et 2,5, plus préférablement entre 1,0 et 1,5.

11. Ensemble de brasage comprenant une feuille de brasage selon l'une des revendications précédentes, ledit ensemble étant composé d'une feuille de brasage à quatre ou cinq couches comprenant une couche centrale (1), une couche intermédiaire (3) de chaque côté de la couche centrale et des couches de placage (2) sur les deux couches intermédiaires (3).

12. Utilisation d'un alliage d'aluminium selon l'une des revendications 1 à 6 dans un produit de feuille de brasage ou dans un ensemble brasé selon la revendication 11.

13. Procédé pour produire une feuille de brasage en alliage d'aluminium ayant une haute résistance et une bonne résistance à la corrosion, comprenant les étapes suivantes :
a) coulage d'un lingot central ayant la composition suivante (en % en poids) :
Cu : 1, 2 à 4, 0
Mn : 0,1 à 0,5
Mg : 0,06 à 1,5
Si : ≤ 0,5
Zn : ≤ 0,4
Fe : ≤ 0, 5
et, en option, un ou plus parmi :
Zr : ≤ 0,25
Cr : ≤ 0,25
V : ≤ 0,25
Ti : ≤ 0,25
le reste étant de l'aluminium et des éléments accidentels et impuretés en tant que matériau central,
b) homogénéisation et/ou préchauffage du lingot central après coulage,
c) coulage d'un lingot de couche intermédiaire comprenant soit un matériau d'anode sacrificielle qui est moins résistant à la corrosion que le centre (1), soit un matériau protecteur qui est plus résistant à la corrosion que le centre, de préférence soit une composition d'alliage Al-Mn du type AA3xxx, soit de l'aluminium pur du type AA1xxx, soit un alliage AlMgSi du type AA6xxx, en option avec addition de Zn jusqu'à 3 %, homogénéisation et/ou préchauffage du lingot de couche intermédiaire après coulage et laminage à chaud dudit lingot de couche intermédiaire pour obtenir un élément de couche intermédiaire laminé,
d) coulage d'un lingot de placage comprenant un alliage d'apport à base Al-Si, homogénéisation et/ou préchauffage du lingot de placage après coulage et laminage à chaud dudit lingot de placage pour obtenir un élément de placage laminé,
e) superposition du dudit lingot central, dudit élément de couche intermédiaire et dudit élément de placage laminé à chaud pour former un élément en couches,
f) laminage à chaud dudit élément en couches et, en option, laminage à froid dudit élément en couches pour obtenir un produit laminé,
g) en option, recuit intermédiaire dudit élément en couches entre les passes de laminage à froid,
h) en option, recuit final et
i) vieillissement du produit laminé et, en option, recuit intermédiaire/final.

14. Procédé pour produire une feuille de brasage en alliage d'aluminium ayant une haute résistance et une bonne résistance à la corrosion, comprenant les étapes suivantes :
a) coulage d'un lingot de placage multiple en utilisant la composition selon la revendication 13 comme couche centrale (1) et une composition d'alliage Al-Mn du type AA3xxx ou de l'aluminium pur du type AA1xxx ou un alliage AlMgSi du type AA6xxx, agissant comme matériau d'anode sacrificielle moins résistant à la corrosion que le centre (1) ou comme matériau protecteur plus résistant à la corrosion que le centre, en option avec addition de Zn comme une couche intermédiaire (3) des deux côtés de la couche centrale (1), formant ainsi ledit lingot de placage multiple,
b) homogénéisation et/ou préchauffage dudit lingot de placage multiple après coulage,
c) coulage d'un lingot de placage comprenant un alliage d'apport à base Al-Si, homogénéisation et/ou préchauffage du lingot de placage après coulage et laminage à chaud dudit lingot de placage pour obtenir un élément de placage laminé et
d) superposition dudit lingot de placage multiple et dudit élément de placage laminé pour former ledit élément en couches.
